# EUROPEAN PATENT SPECIFICATION

(11) **EP 0 372 965 B1**
(45) Date of publication and mention of the grant of the patent: **09.11.1994**
(21) Application number: 89312776.1
(22) Date of filing: 07.12.1989
(51) Int. Cl.: H04B 1/38, H04Q 7/04

(54) **A two-piece radio telephone**
Zweiteiliges Funktelefon
Radiotéléphone en deux parties

(30) Priority: 08.12.1988 FI 885702
(43) Date of publication of application: 13.06.1990
(73) Proprietor: NOKIA MOBILE PHONES LTD., 24101 Salo (FI)
(72) Inventor: Levanto, Lauri, SF-24130 Salo (FI)
(74) Representative: Cross, Rupert Edward Blount

(56) References cited:
- DE-A- 2 659 673
- GB-A- 2 220 328
- PATENT ABSTRACTS OF JAPAN, vol. 5 (E-051), 10th April 1981;& JP-A-56 002 746
- NEC RESEARCH & DEVELOPMENT, no. 87,October 1987, pages 34-43; Y. TAMURA et al.: "Hand-held portable equipment forcellular mobile telephone"
- ERICSSON REVIEW, vol. 64, no. 3, 1987, pages 141-150; G. JISMALM et al.:"Ericsson telephones for cellular systems"

## Description

The present invention relates to a two-piece radio telephone construction.

At present, the use of various radio telephones is becoming very frequent in different countries. The new networks enable telephone transmission of speech as well as of data, on one hand increasing the possibilites of using the telephone, but on the other hand the increased intelligence complicates the device construction. Growing versatility requirements are posed on the device, i.e. the same telephone should be usable as a mobile telephone as well as an easily portable telephone. These requirements result in certain structural problems.

Functionally the radio telephone comprises a telephone handle and a connected radio unit. In particular, the telephones of cellular systems require additionally a logic unit, which guides the device and especially the functions of its radio unit. Moroever, a power supply is needed. The power can be supplied from the accumulator of the radio telephone itself, or from a battery, or from an external power source, for instance the accumulator of a motor vehicle.

The telephone radio unit comprises in a known manner a transmitter and a receiver for bidirectional transmission of speech and data possibly needed for traffic supervision. The power of the transmitter is typically in the range of 0,5. -20 W. The transmitter and the receiver use the same antenna. As a strong output signal and a weak received signal pass over the same antenna, the signals have to be separated so that only the received signal reaches the sensitive receiver. The separation of the signals is carried out in a known manner by means of an rf switch or rf filters.

The operational range of the telephone depends on the transmitter power as well as on the sensitivity of the receiver. When the power of the transmitter is increased, the power consumption of the device as well as the waste heat increase, the elimination of which requires a relatively sizeable and heavy cooling element.

In portable radio telephones, the power is supplied from the accumulator or batteries, which again increase the weight and size of the device. If one wishes to manufacture a small and handy portable telephone, a so-called hand-portable telephone, the power of the device and the operation time of the telephone unfortunately have to be reduced.

Small portable telephones are manufactured by placing all the functional units in the handle. Due to the above restrictions as to power and operation time, the user frequently needs a more effective motor vehicle telephone. This is possible either by providing a separate vehicle telephone or by stengthening the output signal of a portable telephone outside the telephone with a special post-amplifier, a booster unit.

The use of two telephones is of course expensive. The use of a booster also involves certain problems. it is technically difficult, since the transmitted signal is once separated from the combined signal, is amplified and is again mixed. A booster amplifier also amplifies all the interferences of the telephone itself. This poses severe requirements on the telephone transmitter, thus increasing costs. Costs even increase to a point at which the use of a booster is no longer noticeably cheaper than the use of two separate telephones.

JP-A-56002746 discloses a two-piece radio telephone comprising a separate basic unit and first unit, wherein said basic unit comprises low power units and is connectable with said first unit, and wherein received rf signals and low power modulated rf signals for subsequent transmission move between said basic and first units by separate conductive paths when said basic unit is connected to said first unit. According to JP-A-56002746 the first unit is located in a vehicle, and the basic unit contains a battery and antennae.

This arrangement suffers from the disadvantage that there are redundant parts when the two units are connected together.

The present invention is characterised in that said low power units of said basic unit include a logic unit, a receiver and an rf generating unit for generating said low power modulated rf signals for subsequent transmission by a transmitter means; in that said first unit comprises a first power supply comprising accumulators batteries or an external power supply, and first transmitter means comprising a first separating unit for separating received rf signals from said low power modulated rf signals for subsequent transmission, and a first transmitter; and by a second unit comprising a second power supply comprising accumulators, batteries or an external power supply, and a second transmitter means comprising a second separating unit for separating received rf signals from said low power modulated rf signals for subsequent transmission, and a second transmitter; said first transmitter of said first unit having a higher power output than said second transmitter of said second unit, and said first and second units being interchangeably and independently connectable with said basic unit; the first and second power supplies, transmitter means and separation units being absent from said basic unit.

An example of the invention is described in greater detail below with reference to the enclosed figures, in which
Figure 1 shows schematically the two-piece cell system telephone according to one embodiment of the invention; and
Figure 2 the logical operating diagram of the two-piece cell system telephone according to one embodiment of the invention.

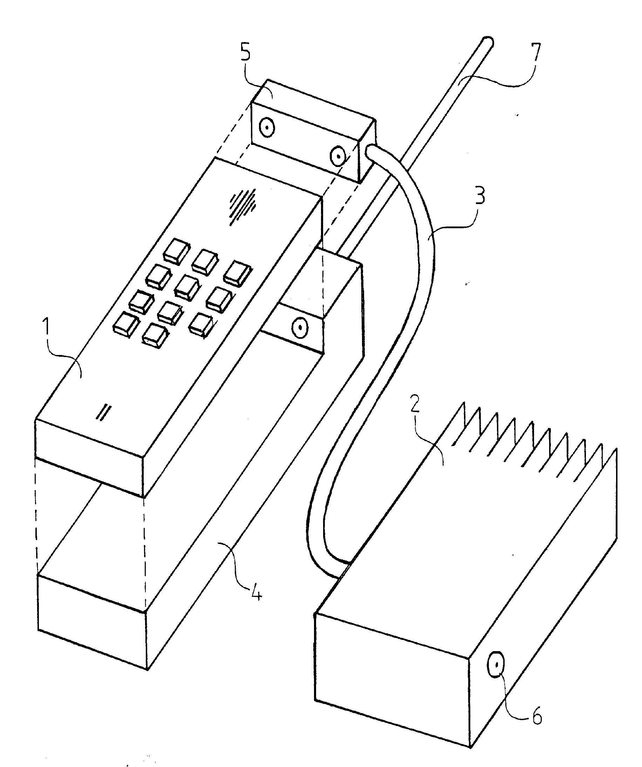

Figure 1 illustrates an external construction example of the two-piece mobile telephone of one embodiment of the invention. The telephone comprises the basic unit 1, its low power power unit 4 as well as an exchangeable high power power unit 2, which can be connected by the conductor 3 and the connector 5 to the basic unit 1. When a light portable radio telephone is desired, a configuration is used which comprises a basic unit 1 placed in the handle (the low power unit 4), containing the audio frequency treatment, a logic unit and a synthesizer modulating the radio frequencies. The low power unit 4 comprises small accumulators or batteries and a low power transmitter as well as an rf directional switch or an rf filter for guiding the received signal to the radio telephone receiver and to prevent the transmitted signal from reaching the receiver. Moreover, the low power unit 4 comprises an antenna 7 for transmitting and receiving a signal. The basic unit 1 is electrically connected directly to the low power power unit 4 by means of appropriate connectors. Mechanical locking is carried out by using a suitable known locking method, e.g. appropriately designed interconnected grooves, flutes or various attachments. Thus a light and compact hand-portable telephone is provided, which can be used when a limited power and operation time are sufficient.

When used in motor vehicles or other cases requiring higher power, the basic unit 1 is connected to a high power power unit 2, which in principle is identical with the low power power unit 4. The amplification of the output signal of the power unit 2 is much greater than in the unit 4. Thus a more effective power source and a better cooling of the dissipation power are needed. The connection is done by fixing the high power power unit 2 by means of the conductor 3 and the connector 5 to the basic unit 1. An antenna is connected to the connector 6 of the power unit 2 (not shown).

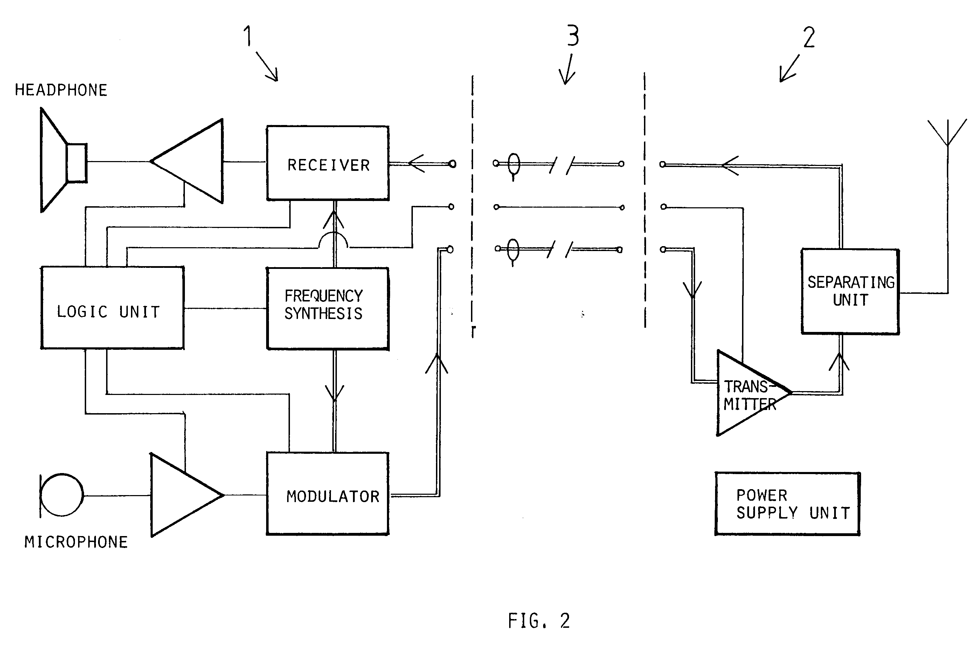

Figure 2 shows the logic diagram of the telephone.

As mentioned above, the basic unit 1 comprises a receiver, a modulator, a logic unit, a frequency synthesizer, a microphone, a headphone loudspeaker with an amplifier and a keyboard. The power unit 2 or 4 comprises a transmitter, a signal separating unit, a power supply unit and an antenna either stationary or over the antenna connector 6.

When the high power power unit 2 is used, the basic unit 1 is connected to this by means of a separate cable 3.

The two-piece radio telephone differs from the booster solution of prior art in that the low power output and weak received signal pass in different conductors, and there is no need for separating the transmitted signal from the once mixed signals. Since the transmitted signal passing in the connecting line is a low power signal, it causes less interference in the received signal.

Thus the device according to one embodiment of the invention may comprise one or more replaceable power units according to the purpose of use. Separate power units have a simpler construction and are cheaper than a booster amplifier or a second telephone.

## Claims

1. A two-piece radio telephone comprising a separate basic unit (1) and first unit (2), wherein said basic unit (1) comprises low power units and is connectable with said first unit (2), and wherein received rf signals and low power modulated rf signals for subsequent transmission move between said basic and first units (1, 2) by separate conductive paths when said basic unit (1) is connected to said first unit (2); characterised in that said low power units of said basic unit (1) include a logic unit, a receiver and an rf generating unit for generating said low power modulated rf signals for subsequent transmission by a transmitter means; in that said first unit (2) comprises a first power supply comprising accumulators, batteries or an external power supply, and first transmitter means comprising a first separating unit for separating received rf signals from said low power modulated rf signals for subsequent transmission, and a first transmitter; and by a second unit (4) comprising a second power supply comprising accumulators, batteries or an external power supply, and a second transmitter means comprising a second separating unit for separating received rf signals from said low power modulated rf signals for subsequent transmission, and a second transmitter; said first transmitter of said first unit (2) having a higher power output than said second transmitter of said second unit (4), and said first and second units (2, 4) being interchangeably and independently connectable with said basic unit (1); the first and second power supplies, transmitter means and separation units being absent from said basic unit (1).

2. A two-piece radio telephone as claimed in Claim 1 characterised in that said second unit (4) is directly connectable to said basic unit (1); and in that said basic unit (1) and said second unit (4) further comprise connectors mounted thereon, said connectors being adapted to be interengaging to complete said separate conductive paths when said basic unit (1) and said second unit (4) are brought into physical contact with each other to permit operation as a radio telephone.

3. A two-piece radio telephone as claimed in Claim 1 or Claim 2 characterised by a connecting cable (3) providing said separate conductive paths between said basic unit (1) and said first unit (2) when said basic unit (1) and said first unit (2) are connected together to permit operation as a radio telephone.

4. A two-piece radio telephone as claimed in any preceding claim characterised in that said second unit (4) further includes a second antenna for receiving and transmitting rf signals, said second antenna being connected to said second separating unit.

5. A two-piece radio telephone as claimed in any preceding claim characterised in that said first unit (2) further includes a first antenna for receiving and transmitting rf signals, said first antenna being connected to said first separating unit.

## Patentansprüche

1. Zweiteiliges Funktelefon, welches umfaßt eine separate Grundeinheit (1) und eine erste Einheit (2), wobei die Grundeinheit (1) Niedrigleistungs-Einheiten umfaßt und mit der ersten Einheit (2) verbindbar ist, und wobei empfangene HF-Signale und niedrigleistungs-modulierte HF-Signale sich zur nachfolgenden Aussendung zwischen der Grund- und der ersten Einheit (1, 2) über getrennte Leitungswege bewegen, wenn die Grundeinheit (1) mit der ersten Einheit (2) verbunden ist; **dadurch gekennzeichnet,** daß die Niedrigleistungs-Einheiten der Grundeinheit (1) eine Logikeinheit, einen Empfanger und eine HF-Erzeugungseinheit zum Erzeugen der mit niedriger Leistung modulierten HF-Signale zur nachfolgenden Aussendung durch eine Sendeeinrichtung umfassen; daß die erste Einheit (2) eine erste, Akkumulatoren, Batterien oder eine externe Stromversorgung umfassende Stromversorgung umfaßt und eine erste Sendeeinrichtung, welche eine erste Abtrenneinheit zum Abtrennen empfangener HF-Signale von den mit niedriger Leistung modulierten HF-Signalen für nachfolgende Aussendung umfaßt, und einen ersten Sender; und durch eine zweite Einheit (4), welche eine zweite Stromversorgung umfaßt, welche Akkumulatoren, Batterien oder eine externe Stromversorgung enthält und eine zweite Sendereinrichtung, welche eine zweite Abtrenneinheit zum Abtrennen empfangener HF-Signale von den mit niedriger Leistung modulierten HF-Signalen zur nachfolgenden Aussendung umfaßt, und einen zweiten Sender; daß der erste Sender der ersten Einheit (2) eine höhere Leistungsabgabe als der zweite Sender der zweiten Einheit (4) besitzt und daß die erste und die zweite Einheit (2, 4) austauschbar und unabhängig mit der Grundeinheit (1) verbindbar sind; wobei die erste und die zweite Stromversorgung, Sendeeinrichtung und Abtrenneinheit bei der Grundeinheit (1) nicht vorhanden sind.

2. Zweiteiliges Funktelefon nach Anspruch 1, **dadurch gekennzeichnet,** daß die zweite Einheit (4) direkt mit der Grundeinheit (1) verbindbar ist; und daß die Grundeinheit (1) und die zweite Einheit (4) weiter daran angebrachte Verbinder umfassen, welche Verbinder ausgelegt sind, miteinander in Eingriff zu kommen, um die getrennten Leitwege herzustellen, wenn die Grundeinheit (1) und die zweite Einheit (4) in körperlichen Kontakt miteinander gebracht werden, um einen Betrieb als Funktelefon zuzulassen.

3. Zweiteiliges Funktelefon nach Anspruch 1 oder 2, **gekennzeichnet durch** ein Verbindungskabel (3), welches die getrennten Leitwege zwischen der Grundeinheit (1) und der ersten Einheit (2) schafft, wenn die Grundeinheit (1) und die erste Einheit (2) miteinander verbunden werden, um einen Betrieb als ein Funktelefon zuzulassen.

4. Zweiteiliges Funktelefon nach einem der vorangehenden Ansprüche, **dadurch gekennzeichnet,** daß die zweite Einheit (4) weiter eine zweite Antenne zum Empfangen und Senden von HF-Signalen enthält, wobei die zweite Antenne mit der zweiten Abtrenneinheit verbunden ist.

5. Zweiteiliges Funktelefon nach einem der vorangehenden Ansprüche, **dadurch gekennzeichnet,** daß die erste Einheit (2) weiter eine erste Antenne zum Empfangen und Senden von HF-Signalen enthält, und daß die erste Antenne mit der ersten Abtrenneinheit verbunden ist.

## Revendications

1. Radiotéléphone en deux pièces comprenant une unité de base (1) et une première unité (2) séparées, dans lequel ladite unité de base (1) comprend des unités de faible puissance et peut être connectée à ladite première unité (2), et dans lequel les signaux hf reçus et les signaux hf modulés de faible puissance pour transmission ultérieure se propagent entre lesdites unités de base et première unité (1, 2) par des trajets conducteurs séparés lorsque ladite unité de base (1) est connectée à ladite première unité (2), caractérisé en ce que lesdites unités de faible puissance de ladite unité de base (1) comprennent une unité logique, un récepteur et une unité génératrice hf pour produire lesdits signaux hf modulés de faible puissance pour transmission ultérieure par un moyen d'émetteur; en ce que ladite première unité (2) comprend une première alimentation comportant des accumulateurs, des batteries ou une alimentation extérieure, et un premier moyen d'émetteur comportant une première unité de séparation afin de séparer les signaux hf reçus desdits signaux hf modulés de faible puissance pour transmission ultérieure, et un premier émetteur; et par une seconde unité (4) comportant une seconde alimentation constituée d'accumulateurs, de batteries ou d'une alimentation extérieure, et un second moyen d'émetteur comprenant une seconde unité de séparation afin de séparer les signaux hf reçus desdits signaux hf modulés de faible puissance pour transmission ultérieure, et un second émetteur; ledit premier émetteur de ladite première unité (2) ayant une sortie de puissance supérieure à celle dudit second émetteur de ladite seconde unité (4), et lesdites première et seconde unités pouvant être connectées à ladite unité de base (1) de façon interchangeable et indépendante; les première et seconde alimentations, les moyens d'émetteur et les unités de séparation étant absents dans ladite unité de base (1).

2. Radiotéléphone en deux pièces selon la revendication 1, caractérisé en ce que ladite second unité (4) peut être connectée directement à ladite unité de base (1); et en ce que ladite unité de base (1) et ladite seconde unité (4) comportent en outre des connecteurs montés sur leur dessus, lesdits connecteurs étant destinés à être interengagés pour compléter lesdits trajets conducteurs séparés lorsque ladite unité de base (1) et ladite seconde unité (4) sont mises en contact physique l'une avec l'autre pour permettre le fonctionnement en radiotéléphone.

3. Radiotéléphone en deux pièces selon la revendication 1 ou la revendication 2, caractérisé par un câble de connexion (3) fournissant lesdits trajets conducteurs séparés entre ladite unité de base (1) et ladite première unité (2) lorsque ladite unité de base (1) et ladite première unité (2) sont connectées ensemble pour permettre le fonctionnement en radiotéléphone.

4. Radiotéléphone en deux pièces selon l'une quelconque des revendications précédentes, caractérisé en ce que ladite seconde unité (4) comporte en outre une seconde antenne pour recevoir et transmettre les signaux hf, ladite seconde antenne étant connectée à ladite seconde unité de séparation.

5. Radiotéléphone en deux pièces selon l'une quelconque des revendications précédentes, caractérisé en ce que ladite première unité (2) comporte en outre une première antenne pour recevoir et transmettre des signaux hf, ladite première antenne étant connectée à ladite première unité de séparation.
